(19) Europäisches Patentamt
European Patent Office
Office européen des brevets

(11) **EP 2 358 769 B1**

(12) **EUROPÄISCHE PATENTSCHRIFT**

(45) Veröffentlichungstag und Bekanntmachung des Hinweises auf die Patenterteilung:
**05.01.2022 Patentblatt 2022/01**

(21) Anmeldenummer: **09756478.5**

(22) Anmeldetag: **18.11.2009**

(51) Int Cl.:
*C08F 220/06* *(2006.01)*    *C08J 3/12* *(2006.01)*
*A61L 15/60* *(2006.01)*

(86) Internationale Anmeldenummer:
**PCT/EP2009/065381**

(87) Internationale Veröffentlichungsnummer:
**WO 2010/057912 (27.05.2010 Gazette 2010/21)**

(54) **VERFAHREN ZUR HERSTELLUNG PERMEABLER WASSERABSORBIERENDER POLYMERPARTIKEL DURCH POLYMERISATION VON TROPFEN EINER MONOMERLÖSUNG**

METHOD FOR PRODUCING PERMEABLE WATER-ABSORBING POLYMER PARTICLES THROUGH POLYMERIZATION OF DROPS OF A MONOMER SOLUTION

PROCÉDÉ DE PRODUCTION DE PARTICULES POLYMÈRES PERMÉABLES ABSORBANT L'EAU PAR POLYMÉRISATION DE GOUTTES D'UNE SOLUTION MONOMÈRE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **21.11.2008  US 116684**

(43) Veröffentlichungstag der Anmeldung:
**24.08.2011  Patentblatt 2011/34**

(73) Patentinhaber: **BASF SE**
**67056 Ludwigshafen am Rhein (DE)**

(72) Erfinder:
• **DANIEL, Thomas**
  **67165 Waldsee (DE)**
• **STUEVEN, Uwe**
  **65812 Bad Soden (DE)**
• **KRÜGER, Marco**
  **68219 Mannheim (DE)**
• **BLEI, Stefan**
  **68163 Mannheim (DE)**
• **LOPEZ VILLANUEVA, Francisco Javier**
  **68199 Mannheim (DE)**
• **HERFERT, Norbert**
  **63674 Altenstadt (DE)**

(74) Vertreter: **BASF IP Association**
**BASF SE**
**G-FLP-C006**
**67056 Ludwigshafen (DE)**

(56) Entgegenhaltungen:
**WO-A1-2008/025652    WO-A1-2008/077779**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft ein Verfahren zur Herstellung wasserabsorbierender Polymerpartikel durch Polymerisation von Tropfen einer Monomerlösung in einer umgebenden Gasphase, wobei die Polymerpartikel mit einem Permeabilitätsverbesserer beschichtet werden.

Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.

Wasserabsorbierende Polymere werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet. Wasserabsorbierende Polymere werden auch als "superabsorbent polymers" bzw. "Superabsorber" bezeichnet.

Durch Sprühpolymerisation können die Verfahrensschritte Polymerisation und Trocknung zusammengefasst werden. Zusätzlich kann die Partikelgröße durch geeignete Verfahrensführung in gewissen Grenzen eingestellt werden.

Die Herstellung wasserabsorbierender Polymerpartikel durch Polymerisation von Tropfen einer Monomerlösung wird beispielsweise in EP 0 348 180 A1, EP 0 816 383 A1, WO 96/40427 A1, US 4,020,256, US 2002/0193546 und DE 35 19 013 A1 beschrieben.

WO 2008/009580 A1, WO 2008/009598 A1, WO 2008/009599 A1 und WO 2008/009612 A1 haben die Herstellung permeabler wasserabsorbierender Polymerpartikel zum Gegenstand.

In WO 2008/095892 A1 und WO 2008/095901 A1 werden Verfahren zur Verminderung nicht umgesetzter Monomere beschrieben.

WO 2008/077779 A1 offenbart die Erhöhung der mechanischen Stabilität wasserabsorbierender Polymerpartikel durch Beschichtung mit Polymeren oder Wachsen.

WO 2008/025652 A1 offenbart die Beschichtung wasserabsorbierender Polymerpartikel mit Polyaminen zur Verbesserung der Permeabilität.

Aufgabe der vorliegenden Erfindung war die Bereitstellung eines verbesserten Verfahrens zur Herstellung permeabler wasserabsorbierender Polymerpartikel durch Polymerisation von Tropfen einer Monomerlösung in einer die Tropfen umgebenden Gasphase.

Gelöst wurde die Aufgabe durch ein Verfahren zur Herstellung permeabler wasserabsorbierender Polymerpartikel durch Polymerisation von Tropfen einer Monomerlösung, enthaltend

a) mindestens ein ethylenisch ungesättigtes, säuregruppentragendes Monomer, das zumindest teilweise neutralisiert sein kann,
b) mindestens einen Vernetzer,
c) mindestens einen Initiator
d) optional ein oder mehrere mit den unter a) genannten Monomeren copolymerisierbare ethylenisch ungesättigte Monomere,
e) optional ein oder mehrere wasserlösliche Polymere und
f) Wasser,

in einer umgebenden Gasphase, wobei die erhaltenen Polymerpartikel mit mindestens einem Permeabilitätsverbesserer beschichtet und optional thermisch und/oder mit Wasserdampf vorbehandelt werden und dass der Permeabilitätsverbesserer eine anorganische partikuläre Substanz, eine anorganische kolloidal gelöste Substanz und/oder ein mehrwertiges Kation ist.

Geeignete mehrwertige Kationen liegen in einer bevorzugten Ausführungsform vor der Beschichtung der Polymerpartikel in Form ihrer wasserlöslichen Salze mit organischen oder anorganischen Anionen vor und werden als wässrige Lösungen oder Dispersionen eingesetzt.

Geeignete anorganische partikuläre Substanzen (anorganische Partikel) sind Tonminerale, wie Montmorillonit, Kaolinit und Talk, wasserunlösliche Sulfate, wie Strontiumsulfat, Kalziumsulfat und Bariumsulfat, Karbonate, wie Magnesiumkarbonat, Kaliumkarbonat und Kalziumkarbonat, Salze mehrwertiger Kationen, wie Aluminiumsulfat, Aluminiumnitrat, Aluminiumchlorid, Kaliumaluminiumsulfat (Kaliumalaun) und Natriumaluminiumsulfat (Natriumalaun), Magnesiumsulfat, Magnesiumcitrat, Magnesiumlaktat, Zirkoniumsulfat, Zirkoniumlaktat, Eisenlaktat, Eisencitrat, Kalziumazetat, Kalziumpropionat, Kalziumcitrat, Kalziumlaktat, Strontiumlaktat, Zinklaktat, Zinksulfat, Zinkcitrat, Aluminiumlaktat, Aluminiumazetat, Aluminiumformiat, Kalziumformiat, Strontiumformiat, Strontiumazetat, Oxide, wie Magnesiumoxid, Aluminiumoxid, Zinkoxid, Eisen-(II)-oxid, Zirkoniumdioxid und Titandioxid, wasserunlösliche Phosphate, wie Magnesiumphosphat, Strontiumphosphat, Aluminiumphosphat, Eisenphosphat, Zirkoniumphophat und Kalziumphosphat, Diatomeenerde, Polykieselsäuren, Zeolithe und Aktivkohlen. Bevorzugt gelangen Polykieselsäuren zum Einsatz, die je nach Herstellungsart zwischen Fällungskieselsäuren und pyrogenen Kieselsäuren unterschieden werden. Beide Varianten sind unter den Namen Silica FK, Sipernat®, Wessalon® (Fällungskieselsäuren) bzw. Aerosil® (pyrogene Kieselsäuren) kommerziell erhältlich. Vorteilhaft sind auch kolloidale Kieselsäurelösungen, worin die Kieselsäureteilchen typischerweise weniger als 1 $\mu$m Durchmesser aufweisen. Derartige Lösungen sind unter dem Namen Levasil® erhältlich.

Vorzugsweise werden aber wasserunlösliche anorganische Partikel verwendet, beispielsweise pyrogene Kieselsäure, Fällungskieselsäure und wasserunlösliche Metallphosphate. Geeignete wasserunlösliche anorganische Partikel werden in der DE 102 39 074 A1 und geeignete wasserunlösliche Metallphosphate werden in der US 6,831,122 beschrieben, welche beide ausdrücklich Bestandteil der vorliegenden Offenbarung sind.

Wasserunlöslich bedeutet hierbei eine Löslichkeit in Wasser bei 23°C von weniger als 1 g/100 g Wasser, vorzugsweise von weniger als 0,5 g/100 g Wasser, besonders bevorzugt von weniger als 0,1 g/100 g Wasser, ganz besonders bevorzugt von weniger als 0,05 g/100 g Wasser. Die wasserunlöslichen anorganischen Partikel können als Dispersion in einem wässrigen oder wassermischbaren Dispergiermittel oder in Substanz eingesetzt werden.

Die gemäß dem erfindungsgemäßen Verfahren einzusetzenden anorganischen Partikel sind vorzugsweise pyrogene Kieselsäuren und/oder Fällungskieselsäuren.

Die anorganischen Partikel weisen eine mittlere Partikelgröße von vorzugsweise weniger als 400 $\mu$m, besonders bevorzugt weniger als 100 $\mu$m, ganz besonders bevorzugt weniger als 50 $\mu$m, auf.

Kristalline anorganische Partikel weisen vorzugsweise eine Partikelgröße von größer 10 $\mu$m auf.

Amorphe anorganische Partikel weisen eine Partikelgröße von vorzugsweise mindestens 1 $\mu$m, besonders bevorzugt mindestens 3 $\mu$m, ganz besonders bevorzugt mindestens 7 $\mu$m auf.

Werden die Polymerpartikel mit anorganischen Partikeln beschichtet, so beträgt die Einsatzmenge bezogen auf die Polymerpartikel vorzugsweise von 0,05 bis 5 Gew.-%, besonders bevorzugt von 0,1 bis 1,5 Gew.-%, ganz besonders bevorzugt von 0,3 bis 1 Gew.-%.

Geeignete mehrwertige Kationen sind beispielsweise zweiwertige Kationen, wie die Kationen von Zink, Magnesium, Kalzium, Eisen und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind Chlorid, Bromid, Sulfat, Hydrogensulfat, Karbonat, Hydrogenkarbonat, Nitrat, Phosphat, Hydrogenphosphat, Dihydrogenphosphat und Carboxylat, wie Azetat, Citrat, Tartrat und Laktat, möglich. Aluminiumsulfat, Aluminiumlaktat und Zirkoniumsulfat sind bevorzugt. Bei Vorliegen verschiedener Diastereomere wie im Falle der Weinsäure sind alle Formen eingeschlossen und können als Anionen für alle erfindungsgemäß einsetzbaren mehrwertigen Kationen verwendet werden. Die mehrwertigen Kationen werden vorzugsweise als Lösung eingesetzt. Als Lösungsmittel für die mehrwertigen Kationen können Wasser, Alkohole, Dimethylformamid, Dimethylsulfoxid sowie Mischungen davon eingesetzt werden. Besonders bevorzugt sind Wasser und Wasser/Alkohol-Mischungen, wie Wasser/Methanol oder Wasser/Propylenglykol.

Weitere besonders geeignete mehrwertige Kationen sind in WO 2005/080479 A1 beschrieben, welche ausdrücklich Bestandteil der vorliegenden Offenbarung sind. Es können weiterhin beliebige Gemische der löslichen Salze ein- und mehrwertiger Kationen eingesetzt werden, beispielsweise kann eine geeignete wässrige Lösung durch Auflösen von Milchsäure oder Alkalimetalllaktat gemeinsam mit Aluminiumsulfat hergestellt und eingesetzt werden. Das Prinzip kann auf beliebige Salze mehrwertiger Kationen verallgemeinert werden. Es können auch Gemische von verschiedenen mehrwertigen Kationen oder beliebige Gemische von deren Salzen eingesetzt werden, wie beispielsweise Zirkoniumlaktat und Aluminiumlaktat, Aluminiumlaktat und Kalziumlaktat, Zirkoniumlaktat und Kalziumcitrat.

Des Weiteren können beliebige organische und anorganische Salze einwertiger Kationen, bevorzugt Alkalimetallsalze, organische Säuren und/oder anorganische Säuren zusätzlich in der Lösung mit den mehrwertigen Kationen anwesend sein. Beispiele hierfür sind Alkalimetallphosphate, Alkalimetallsulfate, Alkalimetallhydrogensulfate, Alkalimetalldihydrogenphosphate, Alkalimetallhydrogenkarbonate, Alkalimetallhydrogensulfite, sowie Formiate, Azetate, Laktate, Propionate, Tartrate, Citrate, Malate der Alkalimetalle, des Ammoniums und des Triethanolamoniums.

Werden die Polymerpartikel mit einem mehrwertigen Kation beschichtet, so beträgt die Einsatzmenge an mehrwertigem Kation bezogen auf die Polymerpartikel üblicherweise mindestens 0,0001 Gew.-%, vorzugsweise von 0,005 bis 5 Gew.-%, besonders bevorzugt von 0,05 bis 1,5 Gew.-%, ganz besonders bevorzugt von 0,1 bis 1 Gew.-%.

Der Permeabilitätsverbesserer wird vorzugsweise in Mischern mit bewegten Mischwerkzeugen, wie Schneckenmischer, Scheibenmischer und Schaufelmischer, auf die Polymerpartikel aufgebracht. Besonders bevorzugt sind Horizontalmischer, wie Schaufelmischer, ganz besonders bevorzugt sind Vertikalmischer. Die Unterscheidung in Horizontalmischer und Vertikalmischer erfolgt über die Lagerung der Mischwelle, d.h. Horizontalmischer haben eine horizontal gelagerte Mischwelle und Vertikalmischer haben eine vertikal gelagerte Mischwelle. Geeignete Mischer sind beispielsweise Horizontale Pflugschar® Mischer (Gebr. Lödige Maschinenbau GmbH; Paderborn; DE), Vrieco-Nauta Continuous Mixer (Hosokawa Micron BV; Doetinchem; NL), Processall Mixmill Mixer (Processall Incorporated; Cincinnati; US) und Schugi Flexomix® (Hosokawa Micron BV; Doetinchem; NL).

Vorzugsweise werden die Polymerpartikel in einem Wirbelbett mit dem Permeabilitätsverbesserer beschichtet. Geeignet sind hierfür diskontinuierliche und kontinuierliche Wirbelbettverfahren, beispielsweise nach dem Wurster- oder Glatt-Zeller-Verfahren. In einer besonders bevorzugten Ausführungsform wird das in WO 2007/074108 A1 beschriebene kontinuierliche Wirbelbettbeschichtungsverfahren eingesetzt. Das dort beschriebene Verfahren eignet sich in besonderem Maße zur gleichmäßigen Beschichtung mit wasserlöslichen und wasserunlöslichen Salzen, mit anorganischen ein- und mehrwertigen Kationen, sowie spezieller Beschichtungen, wie die in DE 195 24 724 A1 offenbarten Wachse und die EP 0 703 265 A1 offenbarten filmbildenden Polymere.

In einer besonders bevorzugten Ausführungsform eignen sich die Polymerpartikel zur Beschichtung mit filmbildenden Polymeren mittels des in WO 2006/082239 A2 beschrieben Verfahrens. Dabei können die eingesetzten Polymerpartikel optional vorher mit allen bekannten Verfahren oberflächennachvernetzt werden, sie werden aber bevorzugt so eingesetzt wie sie bei der Polymerisation anfallen, also nicht in einem zweiten Reaktionsschritt separat oberflächennachvernetzt. Dies ist ein besonderer Vorteil des erfindungsgemäßen Verfahrens. In einer weiteren besonderen Ausführungsform des erfindungsgemäßen Verfahrens wird analog dem in WO 2006/082239 A2 beschrieben Verfahren im Wirbelbett, vorzugweise kontinuierlich, bei einer Trägergastemperatur von weniger als 120°C mit filmbild-denden Polymeren beschichtet und anschließend weiter entsprechend der WO 2006/082239 A2 verfahren.

Die Temperatur der Polymerpartikel beträgt vor und während der Beschichtung vorzugsweise von 40 bis 80°C, besonders bevorzugt von 45 bis 75°C, ganz besonders bevorzugt von 50 bis 70°C. Bei Verwendung wässriger Lösungen oder wässriger Dispersionen zur Beschichtung neigen die Polymerpartikel zum Verklumpen. Diese Verklumpungsneigung nimmt mit steigender Temperatur ab. Höhere Temperaturen senken den Feuchtgehalt der Polymerpartikel und vermindern so deren mechanische Stabilität.

Der Feuchtegehalt der Polymerpartikel beträgt während der Beschichtung vorzugsweise 5 bis 20 Gew.-%, besonders bevorzugt 7 bis 18 Gew.-%, ganz besonders bevorzugt 10 bis 16 Gew.-%. Der Feuchtegehalt wir üblicherweise über die Temperatur und Verweilzeit der Polymerisation eingestellt. Mit steigendem Feuchtegehalt nimmt die mechanische Stabilität der Polymerpartikel zu, bei einem zu hohen Feuchtegehalt werden die Polymerpartikel klebrig.

Der vorliegenden Erfindung liegt die Erkenntnis zugrunde, dass durch Polymerisation von Tropfen einer Monomerlösung in einer umgebenen Gasphase mit anschließender Beschichtung mit einem Permeabilitätsverbesserer wasserabsorbierende Polymerpartikel hoher Zentrifugenretentionskapazität (CRC) und hoher Flüssigkeitsweiterleitung (SFC) oder hoher Permeabilität (GBP) erhalten werden. Da das erfindungsgemäße Verfahren auf eine kovalente Oberflächennachvernetzung vor der Beschichtung mit dem Permeabilitätsverbesserer verzichtet, wird die damit verbundene nachteilige Senkung der Zentrifugenretentionskapazität (CRC) vermieden.

Vorteilhaft werden die Polymerpartikel vor der Beschichtung mit dem Permeabilitätsverbesserer thermisch und/oder mit Wasserdampf vorbehandelt. Durch diese Vorbehandlung wird der Gehalt an nicht umgesetztem Monomer a) in den Polymerpartikeln gesenkt. Derartige Verfahren werden in WO 2008/095892 A1 und WO 2008/095901 A1 beschrieben.

Weiterhin kann nicht umgesetztes Monomer a) durch bereits der Monomerlösung zugesetzte Monomerfänger, wie beispielsweise Harnstoff und besonders bevorzugt ein Salz aus Harnstoff und einer anorganischen Säure, wie beispielsweise Harnstoffphosphat, verringert werden.

Verwendbar ist jedes Salz des Harnstoffs mit einer anorganischen Säure, auch Gemische solcher Salze. Vorzugsweise wird eine anorganische Säure verwendet, die keine reduzierenden Eigenschaften aufweist, also unter üblichen Bedingungen keine anderen Substanzen reduziert. Vorzugsweise wird auch eine nicht oxidierende Säure verwendet, also eine Säure, die unter üblichen Bedingungen keine anderen Substanzen oxidiert. Besonders bevorzugte anorganische Säuren sind insbesondere die Schwefelsäure, die Phosphorsäure, Polyphosphorsäuren, die Halogenwasserstoffsäuren, darunter insbesondere die Fluorwasserstoffsäure und die Chlorwasserstoffsäure (Salzsäure), wobei letztere unter den Halogenwasserstoffsäuren bevorzugt ist. Eine ganz besonders bevorzugte Säure ist die Phosphorsäure.

Das Salz des Harnstoffs mit einer anorganischen Säure wird in einer Menge von üblicherweise 0,01 bis 5 Gew.-%, vorzugsweise 0,1 bis 2,5 Gew.-%, besonders bevorzugt 0,2 bis 1,5 Gew.-%, ganz besonders bevorzugt 0,3 bis 1 Gew.-%, verwendet, jeweils bezogen auf die Polymerpartikel.

Weiterhin können die Polymerpartikel auch während oder nach der Beschichtung mit dem Permeabilitätsverbesserer zusätzlich mit allen dem Fachmann bekannten Monomerreduktionsmitteln, wie beispielsweise Kaliumbisulfit, Natriumbisulfit, Hydroxylamin, Natriumthiosulfat oder Kalziumsulfit, behandelt werden. Die Monomerreduktionsmittel werden vorzugsweise als wässrige Lösung verwendet.

Im Folgenden wird die Herstellung der, üblicherweise wasserunlöslichen, wasserabsorbierenden Polymerpartikel näher erläutert.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 35 g/100 g Wasser.

Geeignete Monomere a) sind beispielsweise ethylenisch ungesättigte Carbonsäuren, wie Acrylsäure, Methacrylsäure, Maleinsäure und Itaconsäure. Besonders bevorzugte Monomere sind Acrylsäure und Methacrylsäure. Ganz besonders bevorzugt ist Acrylsäure.

Weitere geeignete Monomere a) sind beispielsweise ethylenisch ungesättigte Sulfonsäuren, wie Styrolsulfonsäure und 2-Acrylamido-2-methylpropansulfonsäure (AMPS).

Verunreinigungen können einen erheblichen Einfluss auf die Polymerisation haben. Daher sollten die eingesetzten Rohstoffe eine möglichst hohe Reinheit aufweisen. Es ist daher oft vorteilhaft die Monomeren a) speziell zu reinigen. Geeignete Reinigungsverfahren werden beispielsweise in der WO 2002/055469 A1, der WO 2003/078378 A1 und der WO 2004/035514 A1 beschrieben. Ein geeignetes Monomer a) ist beispielsweise eine gemäß WO 2004/035514 A1 gereinigte Acrylsäure mit 99,8460 Gew.-% Acrylsäure, 0,0950 Gew.-% Essigsäure, 0,0332 Gew.-% Wasser, 0,0203 Gew.-% Propionsäure, 0,0001 Gew.-% Furfurale, 0,0001 Gew.-% Maleinsäureanhydrid, 0,0003 Gew.-% Diacrylsäure und 0,0050 Gew.-% Hydrochinonmonomethylether.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Säuregruppen der Monomere a) sind üblicherweise teilweise neutralisiert, vorzugsweise zu 25 bis 85 mol-%, bevorzugt zu 50 bis 80 mol-%, besonders bevorzugt 60 bis 75 mol-%, ganz besonders bevorzugt 65 bis 72 mol%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumcarbonat oder Natriumhydrogencarbonat sowie deren Mischungen. Üblicherweise wird die Neutralisation durch Einmischung des Neutralisationsmittels als wässrige Lösung, als Schmelze, oder bevorzugt auch als Feststoff erreicht. Beispielsweise kann Natriumhydroxid mit einem Wasseranteil deutlich unter 50 Gew.-% als wachsartige Masse mit einem Schmelzpunkt oberhalb 23°C vorliegen. In diesem Fall ist eine Dosierung als Stückgut oder Schmelze bei erhöhter Temperatur möglich. Optional können der Monomerlösung oder ihren Ausgangsstoffen ein oder mehrere Chelatbildner zur Maskierung von Metallionen, wie beispielsweise Eisen, zwecks Stabilisierung zugesetzt werden. Geeignete Chelatbildner sind beispielsweise Alkalicitrate, Citronensäure, Alkalitartrate, Pentanatriumtriphosphat, Ethylendiamintetraacetat, Nitrilotriessigsäure, sowie alle unter dem Namen Trilon® bekannten Chelatbildner, wie beispielsweise Trilon® C (Pentanatriumdiethylentriaminpentaacetat), Trilon® D (Trinatrium-(hydroxyethyl)-ethylen-diamintriacetat), sowie Trilon® M (Methylglycindiessigsäure).

Die Monomere a) enthalten üblicherweise Polymerisationsinhibitoren, vorzugsweise Hydrochinonhalbether, als Lagerstabilisator.

Die Monomerlösung enthält vorzugsweise bis zu 250 Gew.-ppm, bevorzugt höchstens 130 Gew.-ppm, besonders bevorzugt höchstens 70 Gew.-ppm, bevorzugt mindestens 10 Gew.-ppm, besonders bevorzugt mindestens 30 Gew.-ppm, insbesondere um 50 Gew.-ppm, Hydrochinonhalbether, jeweils bezogen auf das unneutralisierte Monomer a). Beispielsweise kann zur Herstellung der Monomerlösung ein ethylenisch ungesättigtes, säuregruppentragendes Monomer mit einem entsprechenden Gehalt an Hydrochinonhalbether verwendet werden. Die Hydrochinonhalbether können aber auch durch Absorption, beispielsweise an Aktivkohle, aus der Monomerlösung entfernt werden.

Bevorzugte Hydrochinonhalbether sind Hydrochinonmonomethylether (MEHQ) und/oder alpha-Tocopherol (Vitamin E).

Geeignete Vernetzer b) sind Verbindungen mit mindestens zwei zur Vernetzung geeigneten Gruppen. Derartige Gruppen sind beispielsweise ethylenisch ungesättigte Gruppen, die in die Polymerkette radikalisch einpolymerisiert werden können, und funktionelle Gruppen, die mit den Säuregruppen des Monomeren a) kovalente Bindungen ausbilden können. Weiterhin sind auch polyvalente Metallsalze, die mit mindestens zwei Säuregruppen des Monomeren a) koordinative Bindungen ausbilden können, als Vernetzer b) geeignet.

Vernetzer b) sind vorzugsweise Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Polyethylenglykoldiacrylat, Allylmethacrylat, Trimethylolpropantriacrylat, Triallylamin, Tetraallylammoniumchlorid, Tetraallyloxyethan, wie in EP 0 530 438 A1 beschrieben, Di- und Triacrylate, wie in EP 0 547 847 A1, EP 0 559 476 A1, EP 0 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/032962 A2 beschrieben.

Bevorzugte Vernetzer b) sind Pentaerythrittriallylether, Tetraalloxyethan, Methylenbismethacrylamid, 15 bis 30-fach ethoxiliertes Glyzerintriacrylat, 15 bis 30-fach ethoxiliertes Trimethylolpropantriacrylat, 15 bis 20-fach ethoxiliertes Trimethylolethantriacrylat, 15 bis 20-fach ethoxiliertes Trimethylolpropantriacrylat, Polyethylenglykoldiacrylat, Trimethylolpropantriacrylat und Triallylamin.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3-bis 5-fach ethoxylierten und/oder propoxylierten Glyzerins, insbesondere das Triacrylat des 3-fach ethoxylierten Glyzerins.

Die Menge an Vernetzer b) beträgt vorzugsweise 0,01 bis 1,5 Gew.-%, besonders bevorzugt 0,05 bis 1 Gew.-

%, ganz besonders bevorzugt 0,1 bis 0,6 Gew.-%, jeweils bezogen auf Monomer a). Mit steigendem Vernetzergehalt sinkt die Zentrifugenretentionskapazität (CRC) und die Absorption unter einem Druck von 21,0 g/cm$^2$ (AUL0.3psi) durchläuft ein Maximum.

Als Initiatoren c) können sämtliche unter den Polymerisationsbedingungen in Radikale zerfallende Verbindungen eingesetzt werden, beispielsweise Peroxide, Hydroperoxide, Wasserstoffperoxid, Persulfate, Azoverbindungen und die so genannten Redoxinitiatoren. Bevorzugt ist der Einsatz von wasserlöslichen Initiatoren. In manchen Fällen ist es vorteilhaft, Mischungen verschiedener Initiatoren zu verwenden, beispielsweise Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden.

Besonders bevorzugte Initiatoren c) sind Azoinitiatoren, wie 2,2'-Azobis-[2-(2-imidazolin-2-yl)propan]-dihydrochlorid und 2,2'-Azobis-[2-(5-methyl-2-imidazolin-2-yl)propan]-dihydrochlorid, und Photoinitiatoren, wie 2-Hydroxy-2-methylpropiophenon und 1-[4-(2-Hydroxyethoxy)-phenyl]-2-hydroxy-2-methyl-1-propan-1-on, Redoxinitiatoren, wie Natriumpersulfat/ Hydroxymethylsulfinsäure, Ammoniumperoxodisulfat/Hydroxymethylsulfinsäure, Wasserstoffperoxid/Hydroxymethylsulfinsäure, Natriumpersulfat/Ascorbinsäure, Ammoniumperoxodisulfat/Ascorbinsäure und Wasserstoffperoxid/Ascorbinsäure, Photoinitiatoren, wie 1-[4-(2-Hydroxyethoxy)-phenyl]-2-hydroxy-2-methyl-1-propan-1-on, sowie deren Mischungen.

Die Initiatoren werden in üblichen Mengen eingesetzt, beispielsweise in Mengen von 0,001 bis 5 Gew.-%, vorzugsweise 0,01 bis 2 Gew.-%, bezogen auf die Monomeren a).

Mit den ethylenisch ungesättigten, säuregruppentragenden Monomeren a) copolymerisierbare ethylenisch ungesättigte Monomere d) sind beispielsweise Acrylamid, Methacrylamid, Hydroxyethylacrylat, Hydroxyethylmethacrylat, Dimethylaminoethylmethacrylat, Dimethylaminoethylacrylat, Dimethylaminopropylacrylat, Diethylaminopropylacrylat, Dimethylaminoethylmethacrylat, Diethylaminoethylmethacrylat.

Als wasserlösliche Polymere e) können Polyvinylalkohol, Polyvinylpyrrolidon, Stärke, Stärkederivate, modifizierte Cellulose, wie Methylcellulose oder Hydroxyethylcellulose, Gelatine, Polyglykole oder Polyacrylsäuren, vorzugsweise Stärke, Stärkederivate und modifizierte Cellulose, eingesetzt werden.

Der Wassergehalt der Monomerlösung beträgt vorzugsweise weniger als 65 Gew.-%, bevorzugt weniger als 62 Gew.-%, besonders bevorzugt weniger als 60 Gew.-%, ganz besonders bevorzugt weniger als 58 Gew.-%.

Die Monomerlösung hat bei 20°C eine dynamische Viskosität von vorzugsweise 0,002 bis 0,02 Pa·s, besonders bevorzugt von 0,004 bis 0,015 Pa·s, ganz besonders bevorzugt von 0,005 bis 0,01 Pa·s. Mit steigender dynamischer Viskosität steigt der mittlere Tropfendurchmesser bei der Tropfenerzeugung.

Die Monomerlösung hat bei 20°C eine Dichte von vorzugsweise 1 bis 1,3 g/cm$^3$, besonders bevorzugt 1,05 bis 1,25 g/cm$^3$, besonders bevorzugt 1,1 bis 1,2 g/cm$^3$.

Die Monomerlösung hat bei 20°C eine Oberflächenspannung von 0,02 bis 0,06 N/m, besonders bevorzugt 0,03 bis 0,05 N/m, besonders bevorzugt 0,035 bis 0,045 N/m. Mit steigender Oberflächenspannung steigt der mittlere Tropfendurchmesser bei der Tropfenerzeugung zu.

Die wässrige Monomerlösung wird unter Ausbildung diskreter Tropfen in eine Gasphase dosiert.

Im erfindungsgemäßen Verfahren können eine oder mehrere Sprühdüsen eingesetzt werden. Die einsetzbaren Sprühdüsen unterliegen keiner Beschränkung. Derartigen Düsen kann die zu versprühende Flüssigkeit unter Druck zugeführt werden. Die Zerteilung der zu versprühenden Flüssigkeit kann dabei dadurch erfolgen, dass sie nach Erreichen einer bestimmten Mindestgeschwindigkeit in der Düsenbohrung entspannt wird. Ferner können für den erfindungsgemäßen Zweck auch Einstoffdüsen, wie beispielsweise Schlitzdüsen oder Drallkammern (Vollkegeldüsen) verwendet werden (beispielsweise von Düsen-Schlick GmbH, DE, oder von Spraying Systems Deutschland GmbH, DE).

Erfindungsgemäß bevorzugt sind Vollkegeldüsen. Darunter sind solche mit einem Öffnungswinkel des Sprühkegels von 60 bis 180° bevorzugt. Besonders bevorzugt sind Öffnungswinkel von 90 bis 120°. Der Durchsatz je Sprühdüse beträgt zweckmäßig 0,1 bis 10 m$^3$/h, häufig 0,5 bis 5 m$^3$/h.

Die Reaktion kann auch in Apparaten durchgeführt werden in denen die Monomerlösung in Form monodisperser Tropfen frei fallen kann. Geeignet dazu sind Apparaturen, wie sie beispielsweise in US 5,269,980 beschrieben sind.

Eine Tropfenerzeugung durch laminaren Strahlzerfall, wie in Rev. Sci. Instr. 38 (1966) 502 beschrieben, ist ebenfalls möglich.

Die Tropfen können aber auch mittels pneumatischer Ziehdüsen, Rotation, Zerschneiden eines Strahls oder schnell ansteuerbarer Mikroventildüsen erzeugt werden.

In einer pneumatischen Ziehdüse wird ein Flüssigkeitsstrahl zusammen mit einem Gasstrom durch eine Blende beschleunigt. Über die Gasmenge kann der Durchmesser des Flüssigkeitsstrahls und damit der Tropfendurchmesser beeinflusst werden.

Bei der Tropfenerzeugung durch Rotation tritt die Flüssigkeit durch die Öffnungen einer rotierenden Scheibe. Durch die auf die Flüssigkeit wirkende Fliehkraft werden Tropfen definierter Größe abgerissen. Bevorzugte Vorrichtungen zur Rotationsvertropfung werden beispielsweise in DE 43 08 842 A1 beschrieben.

Der austretende Flüssigkeitsstrahl kann aber auch mittels eines rotierenden Messers in definierte Segmente zerschnitten werden. Jedes Segment bildet anschließend einen Tropfen.

Bei Verwendung von Mikroventildüsen werden direkt Tropfen mit definiertem Flüssigkeitsvolumen erzeugt.

In einer besonders bevorzugten Ausführungsform der vorliegenden Erfindung wird die Monomerlösung mittels mindestens einer Bohrung unter Ausbildung von Tropfen in den Reaktionsraum dosiert. Die Bohrungen können sich beispielsweise in einer Vertropferplatte befinden.

Eine Vertropferplatte ist eine Platte mit mindestens einer Bohrung, wobei die Flüssigkeit von oben durch die Bohrung tritt. Die Vertropferplatte bzw. die Flüssigkeit kann in Schwingungen versetzt werden, wodurch an der Unterseite der Vertropferplatte je Bohrung eine idealerweise monodisperse Tropfenkette erzeugt wird. In einer bevorzugten Ausführungsform wird die Vertropferplatte nicht angeregt.

Die Anzahl und die Größe der Bohrungen werden gemäß der gewünschten Kapazität und Tropfengröße ausgewählt. Der Tropfendurchmesser beträgt dabei üblicherweise das 1,9-fache des Durchmessers der Bohrung. Wichtig ist hierbei, dass die zu vertropfende Flüssigkeit nicht zu schnell durch die Bohrung tritt bzw. der Druckverlust über die Bohrung nicht zu groß ist. Ansonsten wird die Flüssigkeit nicht vertropft, sondern der Flüssigkeitsstrahl wird infolge der hohen kinetischen Energie zerrissen (versprüht). Die Reynoldszahl bezogen auf den Durchsatz pro Bohrung und den Bohrungsdurchmesser ist vorzugsweise kleiner als 2.000, bevorzugt kleiner 1.600, besonders bevorzugt kleiner 1.400, ganz besonders bevorzugt kleiner 1.200.

Die Vertropferplatte weist üblicherweise mindestens eine, vorzugsweise mindestens 10, besonders bevorzugt mindestens 50, und üblicherweise bis zu 10.000, vorzugsweise bis zu 5.000, besonders bevorzugt bis zu 1.000, Bohrungen auf, wobei die Bohrungen üblicherweise gleichmäßig über die Vertropferplatte verteilt sind, vorzugsweise in der so genannten Dreiecksteilung, d.h. jeweils drei Bohrungen bilden die Ecken eines gleichseitigen Dreiecks.

Der Abstand der Bohrungen beträgt vorzugsweise 1 bis 50 mm, besonders bevorzugt 2,5 bis 20 mm, ganz besonders bevorzugt 5 bis 10 mm.

Die Temperatur der Monomerlösung beim Durchtritt durch die Bohrung beträgt vorzugsweise 10 bis 60°C, besonders bevorzugt 15 bis 50°C, ganz besonders bevorzugt 20 bis 40°C.

Der Reaktionsraum wird von einem Gas durchströmt. Dabei kann das Trägergas im Gleichstrom oder im Gegenstrom zu den frei fallenden Tropfen der Monomerlösung durch den Reaktionsraum geführt werden, bevorzugt im Gleichstrom, d.h. von oben nach unten. Vorzugsweise wird das Gas nach einem Durchgang zumindest teilweise, bevorzugt zu mindestens 50%, besonders bevorzugt zu mindestens 75%, als Kreisgas in den Reaktionsraum zurückgeführt. Üblicherweise wird eine Teilmenge des Trägergases nach jedem Durchgang ausgeschleust, vorzugsweise bis zu 10%, besonders bevorzugt bis zu 3%, ganz besonders bevorzugt bis zu 1%.

Der Sauerstoffgehalt des Trägergases beträgt vorzugsweise von 0,5 bis 15 Vol.-%, besonders bevorzugt von 1 bis 10 Vol.-%, ganz besonders bevorzugt von 2 bis 7 Vol.-%.

Das Trägergas enthält neben Sauerstoff vorzugsweise Stickstoff. Der Stickstoffgehalt des Trägergases beträgt vorzugsweise mindestens 80 Vol.-%, besonders bevorzugt mindesten 90 Vol.-%, ganz besonders bevorzugt mindestens 95 Vol.-%.

Die Gasgeschwindigkeit wird vorzugsweise so eingestellt, dass die Strömung im Reaktionsraum gerichtet ist, beispielsweise liegen keine der allgemeinen Strömungsrichtung entgegen gesetzte Konvektionswirbel vor, und beträgt beispielsweise 0,01 bis 5 m/s, vorzugsweise 0,02 bis 4 m/s, besonders bevorzugt 0,05 bis 3 m/s, ganz besonders bevorzugt 0,1 bis 2 m/s.

Das den Reaktionsraum durchströmende Gas wird zweckmäßigerweise vor Eintritt in den Reaktionsraum auf die Reaktionstemperatur vorgewärmt.

Die Gaseingangstemperatur, d.h. die Temperatur, mit der das Gas in den Reaktionsraum eintritt, beträgt vorzugsweise von 160 bis 250°C, besonders bevorzugt von 180 bis 230°C, ganz besonders bevorzugt von 190 bis 220°C.

Vorteilhaft wird die Gaseintrittstemperatur so geregelt, dass die Gasaustrittstemperatur, d.h. die Temperatur, mit der das Gas den Reaktionsraum verlässt von 100 bis 180°C, besonders bevorzugt von 110 bis 160°C, ganz besonders bevorzugt von 120 bis 140°C, beträgt.

Die Reaktion kann im Überdruck oder im Unterdruck durchgeführt werden, ein Unterdruck von bis zu 100 mbar gegenüber dem Umgebungsdruck ist bevorzugt.

Das Reaktionsabgas, d.h. das den Reaktionsraum verlassende Gas, kann beispielsweise in einem Wärmeaustauscher abgekühlt werden. Dabei kondensieren Wasser und nicht umgesetztes Monomer a). Danach kann das Reaktionsabgas zumindest teilweise wieder aufgewärmt und als Kreisgas in den Reaktionsraum zurückgeführt werden. Ein Teil des Reaktionsabgases kann ausgeschleust und durch frisches Gas ersetzt werden, wobei im Reaktionsabgas enthaltenes Wasser und nicht umgesetzte Monomere a) abgetrennt und rückgeführt werden können.

Besonders bevorzugt ist ein Wärmeverbund, dass heißt, ein Teil der Abwärme beim Abkühlen des Abgases wird zum Aufwärmen des Kreisgases verwendet.

Die Reaktoren können begleit beheizt werden. Die Begleitheizung wird dabei so eingestellt, dass die Wandtemperatur mindestens 5°C oberhalb der Reaktorinnentemperatur liegt und die Kondensation an den Reaktorwänden zuverlässig vermieden wird.

Die beschichteten Polymerpartikel können zur weiteren Verbesserung der Eigenschaften zusätzlich beschichtet oder nachbefeuchtet werden. Geeignete Beschichtungen zur Staubbindung sind beispielsweise Polyole, hyperverzweigte hydrophile Polymere, wie beispielsweise Polyglyzerin, sowie hydrophile Dendrimere. Geeignete Beschichtungen gegen die unerwünschte Verbackungsneigung der Polymerpartikel sind beispielsweise pyrogene Kieselsäure, wie beispielsweise Aerosil® 200, und Tenside, wie beispielsweise Span® 20 (Sorbitanmonolaurat), Rewoderm® S1333 (Dinatriumrizinolsäuremonoethanolamidosulfosuccinat), sowie die in WO 2007/074108 A1 offenbarten Tenside. Besonders geeignet sind N-haltige Tenside, kationische Tenside sowie nicht-ionische Tenside. Geeignete Beschichtungen zur Verbesserung der Farbstabilität (Vergilbungsstabilität) sind beispielsweise Reduktionsmittel, wie Natriumhypophosphit, Natriumsulfit, Natriumhydogensulfit, Brüggolite® FF6 und Brüggolite® FF7 (Brüggemann Chemicals; Heilbronn; DE).

Ein weiterer Gegenstand der vorliegenden Erfindung sind permeable wasserabsorbierende Polymerpartikel mit einer Zentrifugenretentionskapazität (CRC) von mindestens 27 g/g, vorzugsweise von mindestens 29 g/g, besonders bevorzugt von mindestens 30 g/g, einer Flüssigkeitsweiterleitung (SFC) von mindestens $20 \times 10^{-7}$ cm$^3$s/g, vorzugsweise von mindestens $30 \times 10^{-7}$ cm$^3$s/g, besonders bevorzugt von mindestens $40 \times 10^{-7}$ cm$^3$s/g, ganz besonders bevorzugt von mindestens $50 \times 10^{-7}$ cm$^3$s/g, oder einer Permeabilität (GBP) von mindestens 20 Darcies, vorzugsweise von mindestens 30 Darcies, besonders bevorzugt von mindestens 40 Darcies, ganz besonders bevorzugt von mindestens 50 Darcies, sowie einer Anquellgeschwindigkeit (FSR) von mindestens 0,35 g/gs, vorzugsweise von mindestens 0,45 g/gs, besonders bevorzugt von mindestens 0,4 g/gs, ganz besonders bevorzugt von mindestens 0,45 g/gs, oder einem Vortex von weniger als 50 s, vorzugsweise von weniger als 40 s, besonders bevorzugt von weniger als 35 s, ganz besonders bevorzugt von weniger als 30 s.

Die erfindungsgemäßen wasserabsorbierenden Polymerpartikel haben vorzugsweise die Form von, teilweise eingedrückten, Hohlkugeln und sind annähernd rund, d.h. die Polymerpartikel weisen eine mittlere Sphärizität (mSPHT) von typischerweise mindestens 0,84, vorzugsweise mindestens 0,86, besonders bevorzugt mindestens 0,88, ganz besonders bevorzugt mindestens 0,9, auf. Die Sphärizität (SPHT) ist definiert als

$$SPHT = \frac{4\pi A}{U^2} \, ,$$

wobei A die Querschnittsfläche und U der Querschnittsumfang der Polymerpartikel ist. Die mittlere Sphärizität (mSPHT) ist die volumengemittelte Sphärizität.

Die mittlere Sphärizität (mSPHT) kann beispielsweise mit dem Bildanalysesystem Camsizer® (Retsch Technolgy GmbH; Haan; DE) bestimmt werden.

Polymerpartikel mit relativ niedriger mittlerer Sphärizität (mSPHT) werden durch umgekehrte Suspensionspolymerisation erhalten, wenn die Polymerpartikel während oder nach der Polymerisation agglomeriert werden.

Die durch übliche Lösungspolymerisation (Gelpolymerisation) hergestellten wasserabsorbierenden Polymerpartikel werden nach der Trocknung gemahlen und klassiert wobei unregelmäßige Polymerpartikel erhalten werden. Die mittlere Sphärizität (mSPHT) dieser Polymerpartikel beträgt zwischen ca. 0,72 und ca. 0,78.

Die erfindungsgemäßen wasserabsorbierenden Polymerpartikel weisen einen Gehalt an hydrophobem Lösungsmittel von typischerweise weniger als 0,005 Gew.-%, vorzugsweise weniger als 0,002 Gew.-%, besonders bevorzugt weniger als 0,001 Gew.-%, ganz besonders bevorzugt weniger als 0,0005 Gew.-%, auf. Der Gehalt an hydrophobem Lösungsmittel kann gaschromatographisch bestimmt werden, beispielsweise mittels der Head-Space-Technik.

Polymerpartikel, die durch umgekehrte Suspensionspolymerisation erhalten wurden, enthalten üblicherweise noch ca. 0,01 Gew.-% des als Reaktionsmediums verwendeten hydrophoben Lösungsmittels.

Der mittlere Durchmesser der erfindungsgemäßen wasserabsorbierenden Polymerpartikel beträgt vorzugsweise 300 bis 450 $\mu$m, besonders bevorzugt von 320 bis 420 $\mu$m, ganz besonders von 340 bis 400 $\mu$m.

Die erfindungsgemäßen wasserabsorbierenden Polymerpartikel sind vorzugsweise mit anorganischen partikulären Substanzen und/oder mehrwertigen Kationen beschichtet.

Die erfindungsgemäßen wasserabsorbierenden Polymerpartikel weisen einen Feuchtegehalt von vorzugsweise 5 bis 20 Gew.-%, besonders bevorzugt von 7 bis 18 Gew.-%, ganz besonders bevorzugt von 10 bis 16 Gew.-%, auf.

Die erfindungsgemäßen wasserabsorbierenden Polymerpartikel weisen ein Schüttgewicht von typischerweise mindestens 0,55 g/cm$^3$, vorzugsweise mindestens 0,57 g/cm$^3$, besonders bevorzugt mindestens 0,59 g/cm$^3$, ganz besonders bevorzugt mindestens 0,6 g/cm$^3$ üblicherweise weniger als 0,75 g/cm$^3$, auf.

Weitere Gegenstände der vorliegenden Erfindung sind Hygieneartikel, welche die erfindungsgemäßen wasserabsorbierenden Polymerpartikel enthalten. Beispielsweise kann der Hygieneartikel wie folgt aufgebaut sein:

(A) eine obere flüssigkeitsdurchlässige Abdeckung
(B) eine untere flüssigkeitsundurchlässige Schicht
(C) einen zwischen (A) und (B) befindlichen absorbierenden Kern (absorbent core), enthaltend

10 bis 100 Gew.-% der erfindungsgemäßen wasserabsorbierenden Polymerpartikel

0 bis 90 Gew.-% hydrophiles Fasermaterial

bevorzugt 30 bis 100 Gew.-% der erfindungsgemäßen wasserabsorbierenden Polymerpartikel, 0 bis 70 Gew.-% hydrophiles Fasermaterial besonders bevorzugt 50 bis 100 Gew.-% der erfindungsgemäßen wasserabsorbierenden Polymerpartikel 0 bis 50 Gew.-% hydrophiles Fasermaterial

insbesondere bevorzugt 70 bis 100 Gew.-% der erfindungsgemäßen wasserabsorbierenden Polymerpartikel, 0 bis 30 Gew.-% hydrophiles Fasermaterial

am meisten bevorzugt 90 bis 100 Gew.-% der erfindungsgemäßen wasserabsorbierenden Polymerpartikel, 0 bis 10 Gew.-% hydrophiles Fasermaterial

(D) optional eine unmittelbar oberhalb und unterhalb des absorbierenden Kerns (C) befindliche Gewebeschicht ((tissue layer) und

(E) optional eine zwischen (A) und (C) befindliche Verteil- und Aufnahmeschicht (acquisition distribution layer).

Unter Hygieneartikel sind dabei beispielsweise Inkontinenzeinlagen und Inkontinenzhosen für Erwachsene oder Windeln für Babys zu verstehen.

Die wasserabsorbierenden Polymerpartikel werden mittels der nachfolgend beschriebenen Testmethoden geprüft.

Methoden:

Die Messungen sollten, wenn nicht anders angegeben, bei einer Umgebungstemperatur von $23 \pm 2$ °C und einer relativen Luftfeuchte von $50 \pm 10$ % durchgeführt werden. Die wasserabsorbierenden Polymerpartikel werden vor der Messung gut durchmischt.

mittlere Spärizität

Die mittlere Sphärizität (mSPHT) wird mit dem Bildanalysesystem Camsizer® (Retsch Technolgy GmbH; Haan; DE) bestimmt.

Flüssigkeitsweiterleitung (Saline Flow Conductivitv)

Die Flüssigkeitsweiterleitung (SFC) einer gequollenen Gelschicht unter Druckbelastung von 0,3 psi (2070 Pa) wird, wie in EP 0 640 330 A1 beschrieben, als Gel-Layer-Permeability einer gequollenen Gelschicht aus wasserabsorbierenden Polymerpartikeln bestimmt, wobei die in zuvor genannter Patentanmeldung auf Seite 19 und in Figur 8 beschriebene Apparatur dahingehend modifiziert wurde, dass die Glasfritte (40) nicht mehr verwendet wird, der Stempel (39) aus gleichem Kunststoffmaterial besteht wie der Zylinder (37) und jetzt über die gesamte Auflagefläche gleichmäßig verteilt 21 gleichgroße Bohrungen enthält. Die Vorgehensweise sowie Auswertung der Messung bleibt unverändert gegenüber EP 0 640 330 A1. Der Durchfluss wird automatisch erfasst.

Die Flüssigkeitsweiterleitung (SFC) wird wie folgt berechnet:

$$\text{SFC [cm}^3\text{s/g]} = (Fg(t=0)xL0)/(dxAxWP),$$

wobei $Fg(t=0)$ der Durchfluss an NaCl-Lösung in g/s ist, der anhand einer linearen Regressionsanalyse der Daten $Fg(t)$ der Durchflussbestimmungen durch Extrapolation gegen $t=0$ erhalten wird, L0 die Dicke der Gelschicht in cm, d die Dichte der NaCl-Lösung in g/cm$^3$, A die Fläche der Gelschicht in cm$^2$ und WP der hydrostatische Druck über der Gelschicht in dyn/cm$^2$.

Anquellgeschwindigkeit (Free Swell Rate)

Zur Bestimmung der Anquellgeschwindigkeit (FSR) werden 1,00 g (= $W_1$) der trockenen wasserabsorbierenden Polymerpartikel in ein 25 ml Becherglas eingewogen und gleichmäßig auf dessen Boden verteilt. Dann werden 20 ml einer 0,9 gew.-%igen Kochsalzlösung in ein zweites Becherglas dosiert. Der Inhalt dieses Glases wird dem ersten zügig hinzugefügt und eine Stoppuhr gestartet. Sobald der letzte Tropfen Salzlösung absorbiert wurde, was man am Verschwinden der Reflexion auf der Flüssigkeitsoberfläche erkennt, wird die Stoppuhr angehalten. Die genaue Flüssigkeitsmenge, die aus dem zweiten Becherglas ausgegossen und durch das Polymer im ersten Becherglas absorbiert wurde, wird durch Rückwägung des zweiten Becherglases genau bestimmt (= $W_2$). Die für die Absorption benötigte Zeitspanne, die mit der Stoppuhr gemessen wurde, wird als t bezeichnet.

Daraus errechnet sich die Anquellgeschwindigkeit (FSR) wie folgt:

$$FSR\ [g/gs] = W_2/(W_1 \times t)$$

Vortex-Test

In ein 100 ml-Becherglas, welches ein Magnetrührstäbchen der Größe 30 mm x 6 mm enthält, werden 50,0 ml ± 1,0 ml einer 0,9 Gew.-%igen wässrigen Kochsalzlösung gegeben. Mit Hilfe eines Magnetrührers wird die Kochsalzlösung bei 600 Upm gerührt. Es werden dann möglichst schnell 2,000 g ± 0,010 g wasserabsorbierende Polymerpartikel zugegeben, und die Zeit gemessen, die vergeht, bis die Rührtraube durch die Absorption der Kochsalzlösung durch die wasserabsorbierenden Polymerpartikel verschwindet. Dabei kann der ganze Inhalt des Becherglases sich als einheitliche Gelmasse immer noch drehen, aber die Oberfläche der gelierten Kochsalzlösung darf keine individuellen Turbulenzen mehr zeigen. Die benötigte Zeit wird als Vortex berichtet.

Permeabilität (Free Swell Gel Bed Permeabilitv)

Die Methode zur Bestimmung der Permeabilität (GBP) ist in der US 2005/0256757 A1, Absätze [0061] bis [0075], beschrieben.

Feuchtegehalt (Moisture Content)

Der Feuchtegehalt der wasserabsorbierenden Polymerpartikel wird gemäß der von der EDANA empfohlenen Testmethode Nr. WSP 230.2-05 "Moisture content" bestimmt.

Zentrifugenretentionskapazität (Centrifuge Retention Capacity)

Die Zentrifugenretentionskapazität (CRC) wird gemäß der von der EDANA empfohlenen Testmethode Nr. WSP 241.2-05 "Centrifuge Retention Capacity" bestimmt.

Extrahierbare (Extractables)

Die Extrahierbaren werden gemäß der von der EDANA empfohlenen Testmethode Nr. WSP 270.2-05 "Extractables" bestimmt.
Die EDANA-Testmethoden sind beispielsweise erhältlich bei der EDANA, Avenue Eugene Plasky 157, B-1030 Brüssel, Belgien.
Beispiele:

Herstellung der Polymerpartikel

Beispiel 1

Ein Werner & Pfleiderer LUK 8.0 K2-Kneter (2 Sigma-Wellen) wurde mit Stickstoff gespült und mit einer mit Stickstoff inertisierten Mischung bestehend aus 5166 g einer 37,7 gew.-%igen wässrigen Natriumacrylat-Lösung, 574 g Acrylsäure und 720 g entionisiertem Wasser gefüllt. Anschließend wurden 7,2 bis 13,5 g dreifach ethoxyliertes Glycerintriacrylat (GlyTA), 10 g einer 0,25 gew.-%igen wässrigen Ascorbinsäure-Lösung, 16,0 g einer 15 gew.-%igen wässrigen Natriumpersulfat-Lösung und 7,5 g einer 3 gew.-%igen wässrigen Wasserstoffperoxid-Lösung zugegeben. Der Kneter wurde mit Wellengeschwindigkeiten von 98 Upm und 49 Upm betrieben. Direkt nach der Zugabe der Wasserstoffperoxid-Lösung wurde der Heizmantel des Kneters auf 80°C temperiert. Kurze Zeit später polymerisierte die Monomerlösung und erreichte nach ca. 5 Minuten eine Peak-Temperatur von 80 bis 90°C. Danach wurde die Heizung des Heizmantels abgestellt und das Gel reagierte bei laufenden Kneterwellen noch 15 Minuten nach. Anschließend wurde das erhaltene Polymergel bei 170°C 75 Minuten in einem Umlufttrockenschrank getrocknet. Das getrocknete Polymergel wurde dreimal mittels einer Walzenmühle (Gebrüder Baumeister LRC 125/70) gemahlen, wobei die Spalteinstellungen 1000 $\mu$m, 600 $\mu$m und 400 $\mu$m betrugen, und anschließend auf eine Partikelgröße von 150 bis 850 $\mu$m abgesiebt wurde.
Die erhaltenen Polymerpartikel wurden analysiert. Die Ergebnisse sind in der Tabelle 1 zusammengefasst.

Tab. 1: Polymerisation im Kneter

| Beispiel | GlyTA [g] | CRC [g/g] | Extrahierbare [%] | SFC [$10^{-7}$ cm$^3$s/g] | GBP [Darcies] | Feuchtegehalt [%] | mSPHT |
|---|---|---|---|---|---|---|---|
| 1-1 | 7,2 | 34,5 | 10,2 | 1 | 1 | 0,5 | 0,74 |
| 1-2 | 9,3 | 32,1 | 9,8 | 1 | 1 | 0,4 | 0,73 |
| 1-3 | 11,2 | 30,6 | 7,6 | 2 | 3 | 0,5 | 0,75 |
| 1-4 | 13,5 | 28,5 | 6,1 | 3 | 5 | 0,3 | 0,74 |

Beispiel 2

1121,2 g Acrylsäure wurden in einen 4-Liter-Glasreaktor gegeben, der mit einem Deckel, einem Thermometer und einem Einleitungsrohr für Stickstoff versehen, sowie mit einem Isoliermantel umgeben war. Danach wurden 5,6 bis 13,5 g Pentaerythrittriallylether (Penta), 2346,9 g entionisiertes Wasser und 500 g Eis, hergestellt mit entionisiertem Wasser, zugegeben. Die Monomerlösung wurde 30 Minuten lang mit Stickstoff inertisiert. Dann wurden 12,3 g einer 1 gew.-%-igen wässrigen Wasserstoffperoxid-Lösung und 12,3 g einer 1 gew.-%igen wässrigen Ascorbinsäure-Lösung gleichzeitig zugesetzt. Nach der Zugabe erfolgte ein rascher Temperaturanstieg und die Monomerlösung wurde viskos. Das Stickstoff-Einleitungsrohr wurde aus der Monomerlösung herausgezogen und verblieb in der Gasphase bis eine Peak-Temperatur von ca. 90 bis 95°C erreicht wurde. Das erhaltene Polymergel wurde über Nacht stehen gelassen, aus dem Glasreaktor herausgenommen und mit Hilfe eines Extruders (Modell 4812; Hobart Corporation, Troy; US) zerkleinert. Das zerkleinerte Polymergel wurde mit 838,1 g einer 50 gew.-%igen Natronlauge versetzt, händisch durchgeknetet, und nochmals zweimal extrudiert. Danach wurde dem Polymergel eine Lösung von 10,4 g Natriumbisulfit in 200 g entionisiertem Wasser zugesetzt. Das Polymergel wurde erneut händisch durchgeknetet und abermals zweimal extrudiert. Anschließend wurde das Polymergel bei 150°C 90 Minuten lang im Umlufttrockenschrank getrocknet. Das getrocknete Polymergel wurde mittels einer Hammermühle (Modell ZM 200; Retsch GmbH; Haan; DE) bei 14000 Upm gemahlen, und anschließend auf eine Partikelgröße von 150 bis 850 μm abgesiebt.

Die erhaltenen Polymerpartikel wurden analysiert. Die Ergebnisse sind in der Tabelle 2 zusammengefasst.

Tab. 2: Polymerisation im Glasreaktor

| Beispiel | Penta [g] | CRC [g/g] | SFC [$10^{-7}$ cm$^3$s/g] | GBP [Darcies] | Extrahierbare [%] | Feuchtegehalt [%] | mSPHT |
|---|---|---|---|---|---|---|---|
| 2-1 | 5,6 | 35,1 | 0 | 0 | 4,8 | 1,0 | 0,76 |
| 2-2 | 7,8 | 32,9 | 0 | 1 | 4,5 | 0,9 | 0,76 |
| 2-3 | 10,6 | 30,4 | 1 | 2 | 3,7 | 1,2 | 0,75 |
| 2-4 | 13,4 | 28,8 | 2 | 2 | 3,1 | 0,8 | 0,77 |

Beispiel 3

14,3 kg wässrige Natriumacrylat-Lösung (37,5 gew.-%ige Lösung in entionisiertem Wasser), 1,4 kg Acrylsäure und 350 g entionisiertes Wasser wurden mit 9,9 bis 27,5 g dreifach ethoxyliertem Glycerintriacrylat (GlyTA) gemischt. Die Lösung wurde in einen erwärmten, mit Stickstoffatmosphäre gefüllten Vertropfungsturm vertropft (180°C, 12 m Höhe, 2 m Breite, Gasgeschwindigkeit 0,1 m/s im Gleichstrom). Die Dosiergeschwindigkeit der Monomerlösung betrug 32 kg/h, die Temperatur der Monomerlösung betrug 25°C. Die Vertropferplatte hatte 60 Bohrungen à 200 μm. Der Vertropfer hatte einen Innendurchmesser von 40 mm und eine Innenhöhe von 2 mm. Der Initiator wurde vor dem Vertropfer über statische Mischer in die Monomerlösung dosiert. Als Initiator wurde eine 3 gew.-%ige Lösung von 2,2'-Azobis-[2-(2-imidazolin-2-yl)-propan]-dihydrochlorid in entionisiertem Wasser verwendet. Die Dosiergeschwindigkeit der Initiatorlösung betrug 2,2 kg/h, die Temperatur der Initiatorlösung betrug 25°C. Mischer und Vertropfer waren direkt miteinander verbunden. Die erhaltenen Polymerpartikel wurden auf eine Partikelgröße von 150 bis 850 μm abgesiebt, um eventuell gebildete Agglomerate abzutrennen.

Die erhaltenen Polymerpartikel wurden analysiert. Die Ergebnisse sind in der Tabelle 3 zusammengefasst.

Tab. 3: Polymerisation von Tropfen in einer umgebenden Gasphase

| Beispiel | GlyTA [g] | CRC [g/g] | SFC [$10^{-7}$ cm$^3$s/g] | GBP [Darcies] | Extrahierbare [%] | Feuchtegehalt [%] | mSPHT |
|---|---|---|---|---|---|---|---|
| 3-1 | 9,9 | 34,8 | 3 | 2 | 3,1 | 7,6 | 0,92 |
| 3-2 | 15,4 | 32,3 | 6 | 3 | 2,8 | 8,0 | 0,91 |
| 3-3 | 19,3 | 30,2 | 12 | 5 | 2,3 | 7,2 | 0,90 |
| 3-4 | 27,5 | 28,3 | 20 | 8 | 1,9 | 7,4 | 0,92 |

Beschichtung der Polymerpartikel

Beispiel 4

800 g Polymerpartikel wurden im Trockenschrank auf 85°C erwärmt und dann in einen auf 80°C vorerhitzten Pflugschar® Mischer Typ M5 mit Heizmantel (Gebr. Lödige Maschinenbau GmbH, Paderborn, DE) gegeben. Bei 450 Upm der Mischerwelle wurde auf die Polymerpartikel innerhalb von 4 Minuten 32 g einer 26,8 gew.-%igen wässrigen Aluminiumsulfat-Lösung aufgesprüht. Die Mischerwellengeschwindigkeit wurde dann auf 60 Upm reduziert und es wurde unter diesen Bedingungen noch 5 Minuten nachgemischt. Die beschichteten Polymerpartikel wurden aus dem Mischer ausgetragen, auf ca. 23°C abkühlen gelassen und eventuell gebildete Agglomerate wurden mittels eines Siebes mit einer Maschenweite von 850 μm abgesiebt.

Die erhaltenen beschichteten Polymerpartikel wurden analysiert. Die Ergebnisse sind in der Tabelle 4 zusammengefasst.

Tab. 4: Beschichtung mit Aluminiumsulfat

| eingesetzte Polymerpartikel | CRC [g/g] | SFC [$10^{-7}$ cm$^3$s/g] | GBP [Darcies] | Vortex [s] | FSR [g/gs] | mSPHT | Feuchtegehalt [%] |
|---|---|---|---|---|---|---|---|
| 1-1*) | 33,6 | 2 | 2 | 82 | 0,19 | 0,74 | 0,9 |
| 1-2*) | 31,5 | 3 | 2 | 78 | 0,21 | 0,76 | 1,1 |
| 1-3*) | 30,0 | 3 | 5 | 73 | 0,24 | 0,75 | 0,8 |
| 1-4*) | 28,1 | 6 | 9 | 65 | 0,26 | 0,74 | 0,9 |
| 2-1*) | 34,2 | 1 | 0 | 66 | 0,34 | 0,77 | 2,1 |
| 2-2*) | 31,9 | 3 | 1 | 59 | 0,32 | 0,78 | 2,0 |
| 2-3*) | 29,7 | 4 | 4 | 54 | 0,35 | 0,78 | 1,9 |
| 2-4*) | 28,4 | 7 | 8 | 52 | 0,38 | 0,77 | 1,8 |
| 3-1 | 34,0 | 12 | 16 | 25 | 0,85 | 0,92 | 7,9 |
| 3-2 | 31,8 | 15 | 25 | 31 | 0,66 | 0,91 | 8,2 |
| 3-3 | 29,7 | 21 | 33 | 37 | 0,50 | 0,92 | 7,7 |
| 3-4 | 27,5 | 67 | 68 | 45 | 0,37 | 0,92 | 7,8 |
| *) Vergleichsbeispiele | | | | | | | |

Beispiel 5

Beispiel 4 wurde wiederholt, allerdings wurde anstelle von wässriger Aluminiumsulfat-Lösung 20 g einer 25,0 gew.-%igen wässrigen Aluminiumlaktat-Lösung aufgesprüht.

Die erhaltenen beschichteten Polymerpartikel wurden analysiert. Die Ergebnisse sind in der Tabelle 5 zusammengefasst.

Tab. 5: Beschichtung mit Aluminiumlaktat

| eingesetzte Polymerpartikel | CRC [g/g] | SFC [$10^{-7}$ cm$^3$s/g] | GBP [Darcies] | Vortex [s] | FSR [g/gs] | Feuchtegehalt [%] |
|---|---|---|---|---|---|---|
| 1-1*) | 34,0 | 2 | 0 | 85 | 0,20 | 1,2 |
| 1-2*) | 31,6 | 4 | 1 | 75 | 0,22 | 1,0 |
| 1-3*) | 30,2 | 10 | 3 | 72 | 0,25 | 0,9 |
| 1-4*) | 28,1 | 15 | 5 | 66 | 0,27 | 0,8 |
| 3-1 | 34,3 | 18 | 6 | 27 | 0,80 | 7,8 |
| 3-2 | 31,9 | 32 | 9 | 34 | 0,61 | 8,1 |
| 3-3 | 29,8 | 43 | 12 | 40 | 0,42 | 7,9 |
| 3-4 | 28,0 | 85 | 16 | 46 | 0,37 | 7,6 |
| *) Vergleichsbeispiele | | | | | | |

Beispiel 6

Beispiel 4 wurde wiederholt, allerdings wurde anstelle von wässriger Aluminiumsulfat-Lösung 10 g einer 30 gew.-%igen wässrigen Dispersion von Kalziumphosphat (Type TCP 130; Rhodia GmbH; Frankfurt am Main; DE) aufgesprüht.

Die erhaltenen beschichteten Polymerpartikel wurden analysiert. Die Ergebnisse sind in der Tabelle 6 zusammengefasst.

Tab. 6: Beschichtung mit Kalziumphosphat

| eingesetzte Polymerpartikel | CRC [g/g] | SFC [$10^{-7}$ cm$^3$s/g] | GBP [Darcies] | Vortex [s] | FSR [g/gs] | Feuchtegehalt [%] |
|---|---|---|---|---|---|---|
| 2-1*) | 34,8 | 1 | 1 | 72 | 0,23 | 1,6 |
| 2-2*) | 33,0 | 3 | 2 | 63 | 0,25 | 1,8 |
| 2-3*) | 30,2 | 5 | 5 | 59 | 0,33 | 1,7 |
| 2-4*) | 28,9 | 9 | 8 | 57 | 0,33 | 1,5 |
| 3-1 | 34,5 | 13 | 12 | 22 | 0,91 | 7,6 |
| 3-2 | 31,9 | 16 | 22 | 28 | 0,69 | 7,8 |
| 3-3 | 30,0 | 24 | 28 | 35 | 0,53 | 7,5 |
| 3-4 | 28,1 | 58 | 44 | 46 | 0,38 | 7,4 |
| *) Vergleichsbeispiele | | | | | | |

Beispiel 7

100 g Polymerpartikel wurden in eine PE-Probenflasche (500 ml Fassungsvermögen) gegeben und mit 0,2 bis 1,0 g pyrogener Kieselsäure (Typ Sipernat® 50, Evonik Degussa GmbH; Frankfurt am Main; DE) versetzt. Der Flascheninhalt wurde mit Hilfe eines Taumelmischers (Typ T2C; Willy A. Bachofen AG Maschinenfabrik, Basel; CH) 15 Minuten lang innig vermischt.

Die erhaltenen beschichteten Polymerpartikel wurden analysiert. Die Ergebnisse sind in der Tabelle 7 zusammengefasst.

Tab. 7: Beschichtung mit pyrogener Kieselsäure

| eingesetzte Polymerpartikel | Sipernat® 50 [g] | CRC [g/g] | SFC [$10^{-7}$ cm$^3$s/g] | GBP [Darcies] | Vortex [s] | Feuchtegehalt [%] |
|---|---|---|---|---|---|---|
| 1-3*) | 0,2 | 30,8 | 3 | 2 | 75 | 0,6 |
| 1-3*) | 0,5 | 30,5 | 4 | 6 | 70 | 0,6 |
| 1-3*) | 1,0 | 30,4 | 7 | 10 | 72 | 0,5 |
| 3-3 | 0,2 | 30,2 | 12 | 16 | 32 | 7,2 |
| 3-3 | 0,5 | 30,5 | 22 | 27 | 34 | 7,0 |
| 3-3 | 1,0 | 30,4 | 32 | 45 | 36 | 7,3 |
| *) Vergleichsbeispiele | | | | | | |

Beispiel 8

Beispiel 7 wurde wiederholt, allerdings wird anstelle von pyrogener Kieselsäure 0,5 bis 1,0 g Aluminiumoxid (Typ Aeroxide® Alu C 805; Evonik Degussa GmbH; Frankfurt am Main; DE) eingesetzt.

Die erhaltenen beschichteten Polymerpartikel wurden analysiert. Die Ergebnisse sind in der Tabelle 8 zusammengefasst.

Tab. 8: Beschichtung mit Aluminiumoxid

| eingesetzte Polymerpartikel | Aeroxide® Alu C 805 [g] | CR C [g/g] | SFC [$10^{-7}$ cm$^3$s/g] | GBP [Darcies] | Vortex [s] | Feuchtegehalt [%] |
|---|---|---|---|---|---|---|
| 2-4*) | 0,5 | 28,6 | 9 | 7 | 58 | 0,8 |
| 2-4*) | 1,0 | 28,9 | 14 | 11 | 53 | 0,9 |
| 3-4 | 0,5 | 28,5 | 72 | 48 | 41 | 7,6 |
| 3-4 | 1,0 | 28,4 | 104 | 72 | 37 | 7,5 |
| *) Vergleichsbeispiele | | | | | | |

Beispiel 9

In einem konischen Wirbelschichtapparat wurden 1000 g Polymerpartikel vorgelegt und mit Hilfe von auf 40°C vorgewärmten Stickstoff fluidisiert. Mit Hilfe einer Zweistoffdüse wurde von unten nach oben in das wirbelnde Produkt hinein 60 g einer 20 gew.-%igen wässrigen Lösung von Zirkonsulfat-Tetrahydrat innerhalb von 6 Minuten eingesprüht.

Die erhaltenen beschichteten Polymerpartikel wurden analysiert. Die Ergebnisse sind in der Tabelle 9 zusammengefasst.

Tab. 9: Beschichtung mit Zirkonsulfat

| eingesetzte Polymerpartikel | CRC [g/g] | SFC [$10^{-7}$ cm$^3$s/g] | GBP [Darcies] | FSR [g/gs] | Feuchtegehalt [%] |
|---|---|---|---|---|---|
| 1-3*) | 30,1 | 8 | 10 | 0,28 | 0,2 |
| 1-4*) | 28,0 | 12 | 14 | 0,29 | 0,2 |
| 3-3 | 29,7 | 55 | 58 | 0,50 | 5,2 |
| 3-4 | 27,9 | 93 | 81 | 0,41 | 5,9 |
| *) Vergleichsbeispiele | | | | | |

Beispiel 10

In einem konischen Wirbelschichtapparat wurden 1000 g Polymerpartikel vorgelegt und mit Hilfe von auf 50°C vorgewärmten Stickstoff fluidisiert. Mit Hilfe einer Zweistoffdüse wurde von unten nach oben in das wirbelnde Produkt hinein zunächst 90 g einer Mischung bestehend aus 60 g entionisiertes Wasser und 30 g einer 30 gew.-%igen Kieselsol-Dispersion (Levasil® 30; H.C. Starck Silicasol GmbH; Goslar; DE) innerhalb von 8 Minuten eingesprüht. Anschließend wurden über dieselbe Düse 150 g einer Mischung aus 100 g entionisiertes Wasser und 50 g einer 20 bis 22 gew.-%igen wässrigen Polyvinylamin-Lösung (Lupamin® 9095; mittleres Molekulargewicht des Polyvinylamins $M_W$ = 340000 g/mol; BASF Corporation; Mount Olive; US) innerhalb von 20 Minuten eingesprüht. Das Produkt wurde nach dem Aufsprühen noch 3 Minuten in der Wirbelschicht nachgetrocknet.

Die erhaltenen beschichteten Polymerpartikel wurden analysiert. Die Ergebnisse sind in der Tabelle 10 zusammengefasst.

Tab. 10: Beschichtung mit Kieselsol und Polyvinylamin

| eingesetzte Polymerpartikel | CRC [g/g] | SFC [$10^{-7}$ cm$^3$s/g] | GBP [Darcies] | Vortex [s] | FSR [g/gs] | Feuchtegehalt [%] |
|---|---|---|---|---|---|---|
| 1-2*) | 31,8 | 3 | 10 | 63 | 0,26 | 0,3 |
| 1-4*) | 28,5 | 11 | 22 | 55 | 0,29 | 0,4 |
| 2-2*) | 32,3 | 2 | 9 | 49 | 0,36 | 0,8 |
| 2-4*) | 28,2 | 8 | 18 | 45 | 0,39 | 0,6 |
| 3-2 | 32,5 | 36 | 77 | 15 | 1,12 | 5,8 |
| 3-4 | 28,0 | 53 | 115 | 21 | 1,03 | 6,2 |
| *) Vergleichsbeispiele | | | | | | |

**Patentansprüche**

1. Verfahren zur Herstellung permeabler wasserabsorbierender Polymerpartikel durch Polymerisation von Tropfen einer Monomerlösung, enthaltend

   a) mindestens ein ethylenisch ungesättigtes, säuregruppentragendes Monomer, das zumindest teilweise neutralisiert sein kann,
   b) mindestens einen Vernetzer,
   c) mindestens einen Initiator,
   d) optional ein oder mehrere mit den unter a) genannten Monomeren copolymerisierbare ethylenisch ungesättigte Monomere,
   e) optional ein oder mehrere wasserlösliche Polymere und
   f) Wasser,

   in einer umgebenden Gasphase, wobei die erhaltenen Polymerpartikel mit mindestens einem Permeabilitätsverbesserer beschichtet und optional thermisch und/oder mit Wasserdampf vorbehandelt werden und dass der Permeabilitätsverbesserer eine anorganische partikuläre Substanz, eine anorganische kolloidal gelöste Substanz und/oder ein mehrwertiges Kation ist.

2. Verfahren gemäß Anspruch 1, **dadurch gekennzeichnet, dass** der Permeabilitätsverbesserer Aluminiumsulfat, Aluminiumlaktat, Kalziumphosphat, pyrogene Kieselsäure, Aluminiumoxid, Zirkoniumsulfat oder eine kolloidale Kieselsäurelösung ist.

3. Verfahren gemäß Anspruch 1 oder 2, **dadurch gekennzeichnet, dass** die Polymerpartikel bei der Beschichtung eine Temperatur von 40 bis 80°C aufweisen.

4. Verfahren gemäß einem der Ansprüche 1 bis 3, **dadurch gekennzeichnet, dass** die Beschichtung in einer Wirbelschicht durchgeführt wird.

5. Verfahren gemäß einem der Ansprüche 1 bis 4, **dadurch gekennzeichnet, dass** die Polymerpartikel bei der Beschichtung einen Feuchtegehalt von mindestens 5 Gew.-% aufweisen, wobei der Feuchtegehalt gemäß der von der EDANA empfohlenen Testmethode Nr. WSP 230.2-05 "Moisture content" bestimmt wird.

**6.** Permeable wasserabsorbierende Polymerpartikel mit einer Zentrifugenretentionskapazität von mindestens 27 g/g, einer Flüssigkeitsweiterleitung von mindestens 20 x $10^{-7}$ cm$^3$s/g oder einer Permeabilität von mindestens 20 Darcies, sowie einer Anquellgeschwindigkeit von mindestens 0,35 g/gs oder einem Vortex von weniger als 50 s, wobei die Zentrifugenretentionskapazität gemäß der von der EDANA empfohlenen Testmethode Nr. WSP 241.2-05 "Centrifuge Retention Capacity" bestimmt wird, die Flüssigkeitsweiterleitung, die Permeabilität, die Anquellgeschwindigkeit und der Vortex gemäß der in der Beschreibung genannten Methoden bestimmt werden und, und dass die Polymerpartikel mit einer anorganischen partikulären Substanz und/oder einem mehrwertigen Kation beschichtet sind.

**7.** Polymerpartikel gemäß Anspruch 6, **dadurch gekennzeichnet, dass** die Polymerpartikel eine mittlere Sphärizität von mindestens 0,84 und/oder einen Gehalt an hydrophoben Lösungsmittel von weniger als 0,0005 Gew.-% aufweisen, wobei die mittlere Sphärizität und der Gehalt an hydrophobem Lösungsmittel gemäß der in der Beschreibung genannten Methoden bestimmt werden.

**8.** Polymerpartikel gemäß Anspruch 6 oder 7, **dadurch gekennzeichnet, dass** die Polymerpartikel mit Aluminiumsulfat, Aluminiumlaktat, Kalziumphosphat, pyrogener Kieselsäure, Aluminiumoxid, Zirkoniumsulfat oder einer kolloidalen Kieselsäurelösung beschichtet sind.

**9.** Polymerpartikel gemäß einem der Ansprüche 6 bis 8, **dadurch gekennzeichnet, dass** die Polymerpartikel einen Feuchtegehalt von mindestens 5 Gew.-% aufweisen, wobei der Feuchtegehalt gemäß der von der EDANA empfohlenen Testmethode Nr. WSP 230.2-05 "Moisture content" bestimmt wird.

**10.** Hygieneartikel, enthaltend Polymerpartikel gemäß einem der Ansprüche 6 bis 9.

**Claims**

**1.** A process for producing permeable water-absorbing polymer particles by polymerizing droplets of a monomer solution comprising

> a) at least one ethylenically unsaturated monomer which bears acid groups and may be at least partly neutralized,
> b) at least one crosslinker,
> c) at least one initiator,
> d) optionally one or more ethylenically unsaturated monomers copolymerizable with the monomers mentioned under a),
> e) optionally one or more water-soluble polymers, and
> f) water,

in a surrounding gas phase, the resulting polymer particles being coated with at least one permeability improver and optionally pretreated thermally and/or with steam, and that the permeability improver is an inorganic particulate substance, an inorganic colloidally dissolved substance and/or a polyvalent cation.

**2.** The process according to claim 1, wherein the permeability improver is aluminum sulfate, aluminum lactate, calcium phosphate, fumed silica, aluminum oxide, zirconium sulfate or a colloidal silica solution.

**3.** The process according to claim 1 or 2, wherein the polymer particles in the course of coating have a temperature of from 40 to 80°C.

**4.** The process according to any one of claims 1 to 3, wherein the coating is performed in a fluidized bed.

**5.** The process according to any one of claims 1 to 4, wherein the polymer particles in the course of coating have a moisture content of at least 5% by weight, moisture content being determined by EDANA recommended test method No. WSP 230.2-05 "Moisture content".

**6.** Permeable water-absorbing polymer particles having a centrifuge retention capacity of at least 27 g/g, a saline flow conductivity of at least 20 x $10^{-7}$ cm$^3$s/g or a gel bed permeability of at least 20 darcies, and a free swell rate of at least 0.35 g/gs or a vortex of less than 50 s, centrifuge retention capacity being determined by EDANA recommended test method No. WSP 241.2-05 "Centrifuge Retention Capacity", saline flow conductivity, gel bed permeability, free swell rate and vortex by the methods specified in the description and, and that the polymer particles are coated with an inorganic particulate substance and/or a polyvalent cation.

7. Polymer particles according to claim 6, which have a mean sphericity of at least 0.84 and/or a content of hydrophobic solvent of less than 0.0005% by weight, mean sphericity and content of hydrophobic solvent being determined by the methods specified in the description.

8. Polymer particles according to claim 6 or 7, which have been coated with aluminum sulfate, aluminum lactate, calcium phosphate, fumed silica, aluminum oxide, zirconium sulfate or a colloidal silica solution.

9. Polymer particles according to any one of claims 6 to 8, which have a moisture content of at least 5% by weight, moisture content being determined by EDANA recommended test method No. WSP 230.2-05 "Moisture content".

10. A hygiene article comprising polymer particles according to any one of claims 6 to 9.

**Revendications**

1. Procédé pour la production de particules de polymère perméables absorbant l'eau, par polymérisation de gouttes d'une solution de monomères contenant

a) au moins un monomère à insaturation éthylénique, contenant des groupes acides, qui peut être au moins partiellement neutralisé,
b) au moins un agent de réticulation,
c) au moins un amorceur,
d) en option un ou plusieurs monomères à insaturation éthylénique, copolymérisables avec les monomères nommés en a) ,
e) en option un ou plusieurs polymères hydrosolubles et
f) de l'eau,

dans une phase gazeuse environnante, dans lequel les particules de polymères obtenues sont enrobées avec au moins un agent améliorant la perméabilité et en option prétraitées thermiquement et/ou par de la vapeur d'eau et que l'agent améliorant la perméabilité est une substance inorganique particulaire, une substance inorganique en solution colloïdale et/ou un cation plurivalent.

2. Procédé selon la revendication 1, **caractérisé en ce que** l'agent améliorant la perméabilité est le sulfate d'aluminium, le lactate d'aluminium, le phosphate de calcium, la silice pyrogénée, l'oxyde d'aluminium, le sulfate de zirconium ou une solution de silice colloïdale.

3. Procédé selon la revendication 1 ou 2, **caractérisé en ce que** les particules de polymère présentent lors de l'enrobage une température de 40 à 80 °C.

4. Procédé selon l'une quelconque des revendications 1 à 3, **caractérisé en ce que** l'enrobage est effectué dans un lit fluidisé.

5. Procédé selon l'une quelconque des revendications 1 à 4, **caractérisé en ce que** les particules de polymère présentent lors de l'enrobage une teneur en humidité d'au moins 5 % en poids, la teneur en humidité étant déterminée selon la méthode d'essai n° WSP 230.2-05 « Moisture content » recommandée par l'EDANA.

6. Particules de polymère perméables absorbant l'eau, ayant une capacité de rétention centrifuge d'au moins 27 g/g, un acheminement de liquide d'au moins $20 \times 10^{-7}$ cm$^3$s/g ou une perméabilité d'au moins 20 darcys, ainsi qu'une vitesse de gonflement d'au moins 0,35 g/gs ou un vortex de moins de 50 s, la capacité de rétention centrifuge étant déterminée selon la méthode d'essai n° WSP 241.2-05 « Centrifuge Retention Capacity » recommandée par l'EDANA, l'acheminement de liquide, la perméabilité, la vitesse de gonflement et le vortex étant déterminés selon les méthodes citées dans la description et, et que les particules de polymère sont enrobées avec une substance inorganique particulaire et/ou un cation multivalent.

7. Particules de polymère selon la revendication 6, **caractérisées en ce que** les particules de polymère présentent une sphéricité d'au moins 0,84 et/ou une teneur en solvants hydrophobes de moins de 0,0005 % en poids, la sphéricité moyenne et la teneur en solvant hydrophobe étant déterminées selon les méthodes citées dans la description.

8. Particules de polymère selon la revendication 6 ou 7, **caractérisées en ce que** les particules de polymère sont enrobées avec du sulfate d'aluminium, du lactate d'aluminium, du phosphate de calcium, de la silice pyrogénée, de l'oxyde d'aluminium, du sulfate de zirconium ou une solution de silice colloïdale.

9. Particules de polymère selon l'une quelconque des revendications 6 à 8, **caractérisées en ce que** les particules de polymère présentent une teneur en humidité d'au moins 5 % en poids, la teneur en humidité étant déterminée selon la méthode d'essai n° WSP 230.2-05 « Moisture content » recommandée par l'EDANA.

10. Article d'hygiène, contenant des particules de polymère selon l'une quelconque des revendications 6 à 9.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0348180 A1
- EP 0816383 A1
- WO 9640427 A1
- US 4020256 A
- US 20020193546 A
- DE 3519013 A1
- WO 2008009580 A1
- WO 2008009598 A1
- WO 2008009599 A1
- WO 2008009612 A1
- WO 2008095892 A1
- WO 2008095901 A1
- WO 2008077779 A1
- WO 2008025652 A1
- DE 10239074 A1
- US 6831122 B
- WO 2005080479 A1
- WO 2007074108 A1
- DE 19524724 A1
- EP 0703265 A1
- WO 2006082239 A2
- WO 2002055469 A1

- WO 2003078378 A1
- WO 2004035514 A1
- EP 0530438 A1
- EP 0547847 A1
- EP 0559476 A1
- EP 0632068 A1
- WO 9321237 A1
- WO 2003104299 A1
- WO 2003104300 A1
- WO 2003104301 A1
- DE 10331450 A1
- DE 10331456 A1
- DE 10355401 A1
- DE 19543368 A1
- DE 19646484 A1
- WO 9015830 A1
- WO 2002032962 A2
- US 5269980 A
- DE 4308842 A1
- EP 0640330 A1
- US 20050256757 A1

### In der Beschreibung aufgeführte Nicht-Patentliteratur

- **F.L. BUCHHOLZ ; A.T. GRAHAM.** Modern Superabsorbent Polymer Technology. Wiley-VCH, 1998, 71-103

- *Rev. Sci. Instr.,* 1966, vol. 38, 502